Europäisches Patentamt

European Patent Office

Office européen des brevets

(19)

(11) Veröffentlichungsnummer : **0 390 796 B1**

# (12)   EUROPÄISCHE PATENTSCHRIFT

(45) Veröffentlichungstag der Patentschrift :
05.08.92 Patentblatt 92/32

(51) Int. Cl.⁵ : **A61C 17/06**

(21) Anmeldenummer : **88909491.8**

(22) Anmeldetag : **11.11.88**

(86) Internationale Anmeldenummer :
**PCT/AT88/00093**

(87) Internationale Veröffentlichungsnummer :
**WO 89/04641 01.06.89 Gazette 89/12**

(54) **ABSCHEIDER MIT HALTERUNG FÜR SAMMELBEHÄLTER.**

(30) Priorität : **20.11.87 AT 3067/87**

(43) Veröffentlichungstag der Anmeldung :
**10.10.90 Patentblatt 90/41**

(45) Bekanntmachung des Hinweises auf die
Patenterteilung :
**05.08.92 Patentblatt 92/32**

(84) Benannte Vertragsstaaten :
**AT CH DE FR GB IT LI NL SE**

(56) Entgegenhaltungen :
**WO-A-86/03669**
**GB-A- 2 141 044**
**US-A- 3 777 403**

(73) Patentinhaber : **Trawöger, Werner**
**Höttinger Au 60**
**A-6020 Innsbruck (AT)**
Patentinhaber : **PREGENZER, Bruno**
**Huebe 30**
**A-6173 Oberperfuss (AT)**

(72) Erfinder : **Trawöger, Werner**
**Höttinger Au 60**
**A-6020 Innsbruck (AT)**
Erfinder : **PREGENZER, Bruno**
**Huebe 30**
**A-6173 Oberperfuss (AT)**

(74) Vertreter : **Torggler, Paul, Dr. et al**
**Patentanwälte Dr. Paul Torggler DDr.**
**Engelbert Hofinger Wilhelm-Greil-Strasse 16**
**A-6020 Innsbruck (AT)**

EP 0 390 796 B1

Anmerkung : Innerhalb von neun Monaten nach der Bekanntmachung des Hinweises auf die Erteilung des europäischen Patents kann jedermann beim Europäischen Patentamt gegen das erteilte europä- ische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patent- übereinkommen).

## Beschreibung

Die Erfindung betrifft einen Abscheider zur Trennung eines Feststoff-Flüssigkeits-Saugluftgemisches in zahnärztlichen Absauganlagen, mit einer mit Leitungsanschlüssen versehenen Halterung und mit einem davon abnehmbar befestigten Gehäuse, das einen alle Ein- und Ausgänge umfassenden Oberteil und einen davon abnehmbaren Sammelbehälter aufweist, wobei jeder Ein- und Ausgang des in die Halterung eingesetzten Gehäuses mit einem Leitungsanschluß der Halterung verbunden ist.

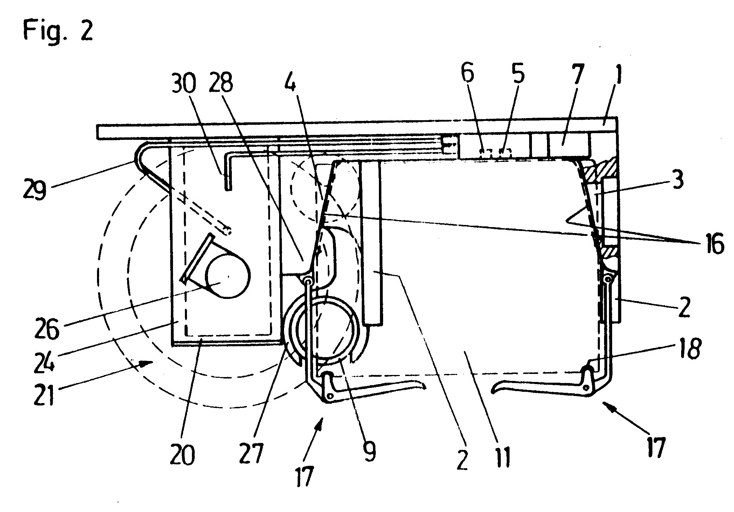

Ein derartiger Abscheider ist der Fig. 2 der EP-B-100 327 zu entnehmen. In das von der Halterung abnehmbare becherförmige Gehäuse ist ein mit einem Gemischeingang, einem Saugluftausgang und einem Flüssigkeitsausgang versehener oberer Boden eingesetzt, der in Abnahmerichtung sich erstreckende Steckkupplungen aufweist. Der Flüssigkeitsausgang umfaßt ein sich bis zum unteren Boden des Gehäuses erstreckendes Rohr, das eine Filterpatrone trägt, die die Mitnahme gesammelter Feststoffe verhindern soll. Für das Wechseln des Gehäuses können Schnappverschlüsse geöffnet werden, sodaß der Behälter nach unten abgenommen werden kann.

Ein weiterer Abscheider ist der US-A-3,777,403 zu entnehmen. Bei diesem Abscheider sind die Ein- und Ausgänge nicht in der Halterung, sondern in einem von der Halterung abnehmbaren Kopfteil vorgesehen, an dem der Sammelbehälter abnehmbar gehalten ist. Für das Wechseln des gefüllten Behälters werden Verchlüsse geöffnet, sodaß er vom Kopfteil abgenommen werden kann, wobei die Gefahr des Verschüttens des nunmehr offenen Behälters besteht.

Bei beiden beschriebenen Abscheidern wird das Gehäuse bzw. Der Behälter nach unten abgenommen, sodaß aus dem mit den Leitungsanschlüssen versehenen Teilen bis zur Wiederanbringung eines Gehäuses bzw. Behälters Gemischreste frei nach unten tropfen bzw. fallen können. Da das enthaltene Gemisch nicht nur ekelerregend, sondern auch in hohem Ausmaß mit Krankheitskeimen kontaminiert ist, ergibt sich hier ein hygienisches und gegebenenfalls auch gesundheitsgefährdendes Problem.

Andere Abscheider zeigen die US-A-4,332,560, das DE-U-83 14 829 und die WO-A- 86/03669, bei denen die Sammelbehälter ebenfalls nach unten abnehmbar sind, sodaß die gleichen Schwierigkeiten vorliegen. Abscheider mit Vollmantelzentrifugen und darunterliegendem Sammelbehälter sind beispielsweise aus der DE-A-30 30614 bekannt, wobei hier nach Abnahme des Sammelbehälters der untere Teil der Zentrifuge frei nach unten ragt. Restmaterial kann hier ebenfalls nach unten fallen.

Die Erfindung hat es sich nun zur Aufgabe gestellt, einen Abscheider der eingangs genannten Art so auszubilden, daß die Abnahme bzw. der Austausch des Behälters ohne die genannten Schwierigkeiten erfolgen kann.

Erfindungsgemäß wird dies dadurch erreicht, daß das Gehäuse in einer schubladenartigen Führung aus der Halterung ausziehbar angeordnet ist, wobei die Halterung und das Gehäuse mit korrespondierenden Führungselementen versehen ist.

Nach dem Lösen einfacher Verschlußelemente, beispielsweise zweier Spannhebel, kann so das gesamte Gehäuse nach vorne abgenommen werden. Da sich aufgrund der schubladenartigen Führung die Leitungsanschlüsse horizontal erstrecken, liegen im Gegensatz zu den eingangs erwähnten Abscheidern nach Abnahme des Gehäuses keine Teile frei, von bzw. aus denen Gemischreste nach unten tropfen können, sodaß eine Verschmutzung der Umgebung nahezu ausgeschlossen ist.

Die Halterung und Führung des Gehäuses in den insbesondere horizontalen Führungselementen bietet weiters die Möglichkeit, im Bereich der Führungselemente die Trennung zwischen dem Oberteil und dem abnehmbaren Sammelbehälter auszubilden, sodaß eine zusätzliche Verbindung der beiden Teile erübrigt wird. Besteht dieses Führungselement der Halterung aus einem etwa C-förmigen Profil, so kann in dieses das Oberteil mit einem unteren Steg und der Sammelbehälter mit einem oberen Steg eingreifen.

Für die dichtende Verbindung der Leitungsanschlüsse für dem Gemischeinlaß und den Auslaß zur Sauganlage mit dem Oberteil des Gehäuses ist insbesondere vorgesehen, daß die Anschlüsse quer zur Abnahmerichtung verlaufen, und in Abnahmerichtung divergierende Paßsitzflächen ausgebildet sind, in die halterungsseitig bevorzugt noch je ein O-Ring eingesetzt ist.

Die weiteren Leitungsanschlüsse, beispielsweise für die Abführung der sich oberhalb der sedimentierenden Feststoffe sammelnden Flüssigkeit, können ebenso ausgebildet sein. Enthält das Gehäuse hiezu eine Pumpe, sodaß die Trennung der Flüssigkeitsabflußleitung druckseitig erfolgt, so ist bevorzugt vorgesehen, daß das Gehäuse einen Elektromotor mit einer Steckkupplung enthält und in der Halterung ein in Abnahmerichtung sich erstreckender Anschluß der Stromversorgungsleitung vorgesehen ist. Dies ist auch von Vorteil, um Wartung oder Reparatur der Pumpe zu erleichtern.

Für die Aufnahme einer Vollmantelzentrifuge ist aus denselben Gründen die Abnahmemöglichkeit des kompletten Gehäuses günstig. Zentrifugenbehälter sind allgemein elastisch gelagert, um den unvermeidlichen Unwuchterscheinungen gerecht zu werden.

Auch dies kann in einer bevorzugten Ausführung der Erfindung erreicht werden, wenn die Halterung eine Auflageplatte für das Gehäuse der Vollmantelzentrifuge aufweist, wobei die Ein- und Ausgänge für die strömenden Medien mittels elastischer Kupplungen, z.B. Gummimanschetten an die halterungsfesten Leitungsanschlüsse angeschlossen sind. Die untere Auflagefläche wird dabei vorzugsweise möglichst klein gehalten, wodurch die Laufruhe der Zentrifuge vergrößert wird, da sich ein Kreiseleffekt einstellt. Die Vibrationsbelastungen der den zentralen Einlaß mit der Gemischzufuhrleitung verbindenden Kupplung sind dabei ebenfalls gering, und über den üblicherweise peripheren Flüssigkeitsauslaß der Zentrifuge, der ebenfalls mit einem Leitungsanschluß der Halterung elastisch gekuppelt ist, ist auch eine Drehmomentstütze gegeben. An der Unterseite der Zentrifuge kann der Sammelbehälter abnehmbar angeordnet sein. An dessen Stelle kann aber auch eine Pumpe vorgesehen sein, die den von der Zentrifuge abgeschiedenen Schlamm in einen daneben angeordneten Sammelbehälter überführt, wobei auch in diesen Ausführungen alle Leitungsanschlüsse an der Halterung ausgebildet sein können. Leitungsanschlüsse für die elektrische Versorgung erstrecken sich in dieser Ausführung bevorzugt vertikal, und sind beispielsweise in der Auflageplatte vorgesehen.

Im Leitungsanschluß für den Gemischeinlaß zur Zentrifuge kann weiters ein Sieb vorgesehen werden, das schubladenartig aus der Halterung ausziehbar ist, sodaß auch dessen Entleerung in einfacher Weise erfolgen kann.

Nachstehend wird nun die Erfindung an Hand der Figuren der beiliegenden Zeichnungen näher beschrieben, ohne darauf beschränkt zu sein.

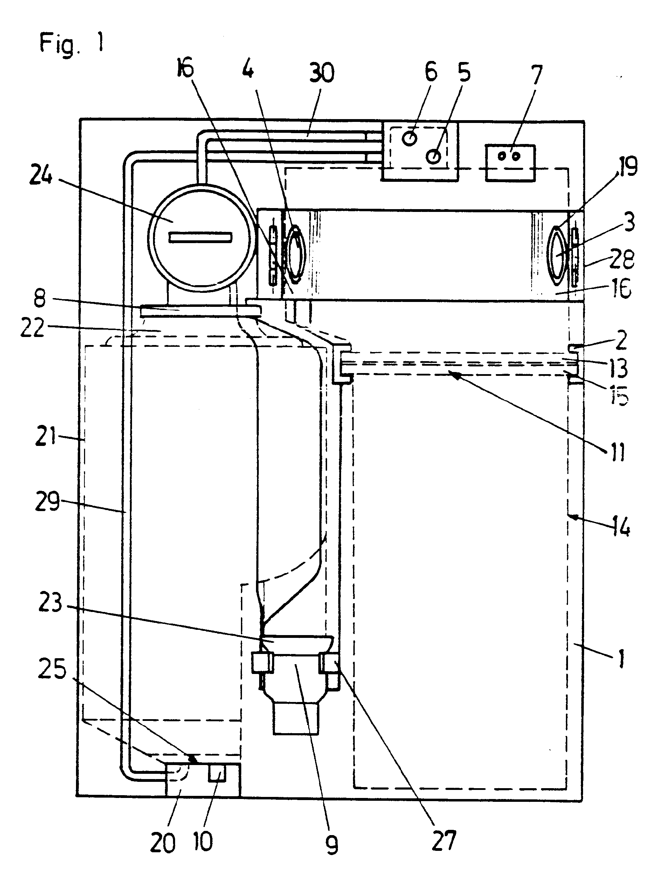

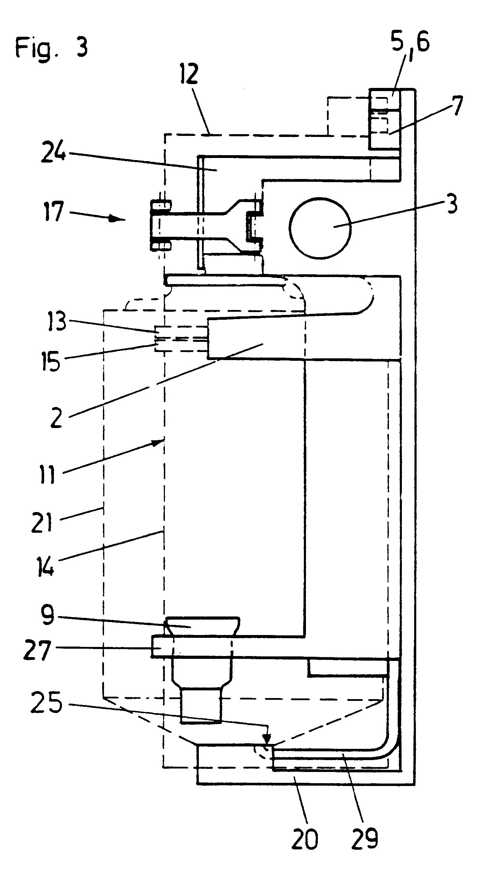

Die Fig. 1 zeigt eine Vorderansicht einer Vertikalhalterung, die zur Aufnahme eines Schwerkraft- und eines Zentrifugenabscheiders vorgesehen ist, die Fig. 2 eine Draufsicht und die Fig. 3 eine Seitenansicht der Halterung von Fig. 1.

Ein erfindungsgemäßer Abscheider besteht aus einer Halterung 1, die im gezeigten Ausführungsbeispiel eine vertikale Halteplatte mit abstehenden Halteteilen aufweist, und insbesondere für eine Wandmontage oder dergleichen gedacht ist, und beispielsweise in einen zahnärztlichen Behandlungsstuhl einbaubar ist. Die Halterung 1 könnte selbstverständlich auch in anderer Weise ausgebildet sein, beispielsweise zur Aufstellung auf einer Unterlage eine Bodenplatte besitzen, usw. In der gezeigten Ausführung dient die Halterung 1 zur Aufnahme zweier Abscheidegehäuse 11,21, wobei im Gehäuse 11 eine Abscheidung durch Schwerkraft, vorzugsweise mit vorgeschaltetem Luftabscheidezyklon, und im Gehäuse 21 eine Zentrifugenabscheidung stattfindet. Dieser Kombination, der über den Anschluß 26 auch noch die Ablaufleitung eines Speibeckens zugeordnet ist, weist besonders hohe Abscheidequoten von über 99% auf. Die Halterung 1 kann jedoch auch nur zur Befestigung eines der beiden Gehäuse 11, 21 vorgesehen sein. Um die Zeichnungen übersichtlicher zu gestalten, wurden alle Teile der Halterung 1 mit ausgezogenen Linien, und die abnehmbaren Gehäuse 11, 21 auf die wesentlichen Umrißkonturen beschränkt, mit strichlierten Linien dargestellt. Für einen Wechsel bzw. für die Entleerung des Sammelbehälters 14 wird nun das komplette Gehäuse 11,21 aus der Halterung 1 abgenommen, sodaß die Entleerung des Sammelbehälters, eine Wartung bzw. Reparatur der sonstigen Einbauten, wie Füllstandsfühler, Elektronikeinheiten für die Steuerung des Pumpen- oder Zentrifugenmotors bzw. des Reinluftauslaßverschlusses usw., an einem geeigneten Arbeitsplatz erfolgen kann. Gerade bei den zuletzt angeführten Arbeiten erweist sich die Komplettabnahme besonders vorteilhaft, da ein Ersatzgehäuse währenddessen verwendet werden kann.

Die Halterung 1 zur Aufnahme eines aus einem Oberteil 12 und einem Sammelbehälter 14 gebildeten Schwerkraftabscheidegehäuse 11 weist zwei horizontal vorstehende Führungselemente 2 auf, die als C-förmige Schienen ausgebildet sind. In diese kann schubladenartig das Gehäuse 11 eingeschoben werden, dessen Oberteil 12 Führungsprofile am unteren Rand und dessen Sammelbehälter 14 Führungsprofile am oberen Rand 15, jeweils in Form von Stegen bzw. Rippen aufweist. Aneinanderliegend ergänzen sie sich jeweils in einem Führungselement 13 des Oberteiles 12, das mit dem Führungselement 2 der Halterung 1 korrespondiert. Nach dem Einsetzen des Gehäuses 11 ist auch die Verbindung zwischen dem Oberteil 12 und dem Sammelbehälter 14 hergestellt, die unter Zwischenlage eines Dichtungsringes zusätzlich ineinandergesteckt sein können. An der Halterung 1 sind weiters Leitungsanschlüsse vorgesehen, die bei Abnahme des Gehäuses 11 freiliegen und bei eingesetztem Gehäuse 11 mit entsprechenden Ein- und Auslaßöffnungen im Oberteil 12 fluchten. Die Zuführung des Gemisches erfolgt über den Anschluß 3, die Abführung der Saugluft, wenn ein Luftabscheidezyklon im Oberteil 12 vorgesehen ist, bzw. die Abführung des Luft-Flüssigkeitsgemisches über den Anschluß 4, die beide in Seitenstegen 28 der Halterung 1 angeordnet sind. Die dichte Verbindung mit dem eingeschobenen Oberteil 12 ergibt sich durch schräge Paßsitzflächen 16 mit eingesetzten Dichtungsringen 19, wobei die nötige Pressung durch zwei in Rasten 18 (Fig.2) des Oberteiles eingreifende Spannhebelverschlüsse 17 erreicht wird, die an den Seitenstegen 28 fixiert sind. Enthält der Schwerkraftabscheider zusätzlich eine Leitung zur getrennten Absaugung der Flüssigkeit, wobei die Pumpe bereits im Oberteil 12 des Gehäuses 11 eingebaut sein kann, so ist ein elektrischer Leitungsanschluß 7 und ein Flüssigkeitsleitungsanschluß 6 an der Halterung 1 ausgebildet, die mit entsprechenden Steckkupplungen am Gehäuse 11 bzw. dessen Oberteil 12 korrespondieren.

In der gezeigten Ausführung ist noch ein weiterer Leitungsanschluß 5 ausgebildet, über den aus der zentrifuge abgetrennter Schlamm in das Schwerkraftabscheidegehäuse 11 rückgeführt wird.

Für die abnehmbare Befestigung des eine zentrifuge enthaltenden Gehäuses 21 sind eine untere Auflageplatte 20, Leitungsanschlüsse 8, 9, 10 und elastische Kupplungsmanschetten 22, 23 vorgesehen. Das Gehäuse 21 besitzt eine möglichst kleine Stellfläche an der Unterseite, die etwa am Boden eines eigenen Sammelbehälters, oder wie in der Fig. 1 dargestellt, am Boden einer Austragpumpe 25 vorgesehen ist. Die Auflageplatte 20 kann im Falle einer Pumpe 25 wieder einen elektrischen Leitungsanschluß 10 und einen Leitungsanschluß für den abzuführenden Schlamm aufweisen. Von diesem führt eine Leitung 29 zurück zum Leitungsanschluß 5, über den der Schlamm dem Sammelbehälter 14 des Gehäuses 11 zugeführt wird.

Für die alleinige Verwendung des Gehäuses 21 mit zentrifuge kann ein Sammelbehälter, wie erwähnt, direkt als Unterteil ausgebildet sein, sodaß die Leitung 29 entfällt.

Das auf der Auflageplatte 20 der Halterung stehende Gehäuse 21 ist an der Oberseite mittels einer elastischen Kupplungsmanschette 22 an den koaxialen Leitungsanschluß 8 angeschlossen, über den das zu trennende Gemisch direkt vom Saughandstück oder über die Leitung 30 aus einem Schwerkraftabscheider, oder über die Leitung 26 aus einem Speibecken in das Gehäuse 21 gelangt, wobei die Kupplungsmanschette 22 neben der leicht lösbaren Leitungsverbindung auch eine elastische Halteverbindung für das Gehäuse 21 bildet. Dem seitlichen Auslaß für die gereinigte Flüssigkeit ist an einer gabelartigen Fassung 27 der Halterung 1 ein Leitungsanschluß für die Abflußleitung zugeordnet, wobei ebenfalls eine elastische, leicht lösbare Kupplungsmanschette 23 die Verbindung bildet. Das Gehäuse 21 kann somit komplett nach oben abgenommen werden, wobei die "Spitzenlagerung" des Gehäuses 21 eine besondere Laufruhe der zentrifuge mit sich bringt. Die Halterung 1 ist noch mit einer Aufnahme für eine Siebschublade 24 versehen, die dem Leitungsanschluß 8 vorgeschaltet ist, um vor allem aus dem Speibecken kommende größere Partikel am Eintritt in die Zentrifuge zu hindern.

Je nach Ausführung des Abscheiders können die Leitungsanschlüsse 3 bis 7 bzw. 8 bis 10 auf das jeweilige Gerät abgestimmt in geeigneter Weise ausgebildet sein. Die Leitungsanschlüsse 5,6 sowie jener für die Leitung 29 könnten ebenso mit schrägen Paßsetzflächen versehen sein, bzw. die Leitungsanschlüsse 3 und 4 als Steckkupplungen ausgebildet sein.

## Patentansprüche

1. Abscheider zur Trennung eines Feststoff-Flüssigkeits-Saugluftgemisches in zahnärztlichen Absauganlagen, mit einer mit Leitungsanschlüssen (3 bis 10) versehenen Halterung (1) und mit einem daran abnehmbar befestigten Gehäuse (11,21), das einen alle Ein- und Ausgänge umfassenden Oberteil (12) und einen davon abnehmbaren Sammelbehälter (14) aufweist, wobei jeder Ein-und Ausgang des in die Halterung (1) eingesetzten Gehäuses (11,21) mit einem Leitungsanschluß (3 bis 10) der Halterung (1) verbunden ist, dadurch gekennzeichnet, daß das Gehäuse (11) in einer schubladenartigen Führung aus der Halterung (1) ausziehbar angeordnet ist, wobei die Halterung (1) und das Gehäuse (11) mit korrespondierenden Führungselementen (2,13) versehen ist.

2. Abscheider nach Anspruch 1, dadurch gekennzeichnet, daß das Führungselement (13) des Gehäuses (11) aus zwei einander ergänzenden Führungsprofilen besteht, wobei eines der beiden Führungsprofile am Oberteil (12) des Gehäuses und das zweite Führungsprofil am oberen Rand (15) des abnehmbaren Sammelbehälters (14) ausgebildet ist.

3. Abscheider nach Anspruch 1 oder 2, dadurch gekennzeichnet, daß zumindest ein Leitungsanschluß (3,4) der Halterung (1) für ein strömendes Medium quer zur Abnahmerichtung verläuft, wobei der Oberteil (12) und der den Leitungsanschluß (3,4) tragende Bereich der Halterung (1) in Abnahmerichtung divergierende Paßsitzflächen (16) aufweisen.

4. Abscheider nach einem der Ansprüche 1 bis 3, dadurch gekennzeichnet, daß das Gehäuse (11,21) einen Elektromotor mit einer Steckkupplung enthält und in der Halterung (1) ein in Abnahmerichtung sich erstreckender Anschluß (7,10) der Stromversorgungsleitung vorgesehen ist.

5. Abscheider nach einem der Ansprüche 1 bis 4, dadurch gekennzeichnet, daß die Halterung (1) eine Auflageplatte (2) für das Gehäuse (21) einer Vollmantelzentrifuge aufweist, wobei die Ein- und Ausgänge des Gehäuses (21) mittels elastischer Kupplungen (22,23) an die Leitungsanschlüsse (8,9) der Halterung (1) angeschlossen sind.

6. Abscheider nach einem der Ansprüche 1 bis 5, dadurch gekennzeichnet daß im Leitungsanschluß (8) der Halterung (1) für die Zuführung von zu trennendem Gemisch ein Sieb (24) vorgesehen ist, das schubladenartig aus der Halterung (1) ausziehbar ist.

## Claims

1. A separator for separating a solid-liquid-suction air mixture in dental suction removal apparatuses, comprising a holder (1) provided with conduit connections (3 to 10), and a housing (11,21) which is removably fixed to the holder and which has an upper portion including all inlets and outlets, and a collecting container (14) which is removable therefrom, wherein each inlet and outlet of the housing (11, 21) which is fitted into the holder (1) is connected to a conduit connection (3 to 10) of the holder (1), characterised in that the housing (11) is arranged in a drawer-like guide in such a way that it can be withdrawn from the holder (1), the holder (1) and the housing (11) being provided with corresponding guide elements (2,13).

2. A separator according to claim 1 characterised in that the guide element (13) of the housing (1) comprises two guide profile members which supplement each other, wherein one of the two guide profile members is provided on the upper portion (12) of the housing and the second guide profile member is provided on the upper edge (15) of the removable collecting container (14).

3. A separator according to claim 1 or claim 2 characterised in that at least one conduit connection (3,4) of the holder (1), for a flowing medium, extends transversely to the removal direction, wherein the upper portion (12) and the region of the holder (1), which carries the conduit connection (3,4), have fitting surfaces (16) which diverge in the removal direction.

4. A separator according to one of claims 1 to 3 characterised in that the housing (11,21) contains an electric motor with a plug connection and provided in the holder (1) is a connection (7,10) of the power supply conduit, which connection extends in the removal direction.

5. A separator according to one of claims 1 to 4 characterised in that the holder (1) has a support plate (2) for the housing (21) of a full-casing centrifuge, wherein the inlets and outlets of the housing (21) are connected by means of elastic couplings (22,23) to the conduit connections (8,9) of the holder (1).

6. A separator according to one of claims 1 to 5 characterised in that provided in the conduit connection (8) of the holder (1) for the feed of mixture to be separated is a filter (24) which can be with from the holder (1) in a drawer-like fashion.

## Revendications

1. Séparateur pour la séparation d'un mélange matières solides-liquide-air d'aspiration dans des installations d'aspiration pour dentistes, comportant un support (1) pourvu de raccords de conduites 3 à 10), et un boîtier (11,21), fixé de façon amovible à celui-ci, qui possède une partie supérieure (12) comprenant toutes les entrées et sorties, et un récipient collecteur (14) apte à être enlevé de celle-ci, chaque entrée et chaque sortie du boîtier (11,21) inséré dans le support (1) étant reliée à un raccord de conduite (3 à 10) du support (1), caractérisé en ce que le boîtier (11) est disposé dans un guide du type à tiroir pour pouvoir être extrait du support (1), ledit support et le boîtier (11) étant pourvus d'éléments de guidage correspondants (2,13).

2. Séparateur selon la revendication 1, caractérisé en ce que l'élément de guidage (13) du boîtier (11) se compose de deux profilés de guidage complémentaires, l'un de ces deux profilés de guidage étant formé au niveau de la partie supérieure (12) du boîtier, tandis que le second profilé de guidage est formé au niveau du bord supérieur (15) du récipient collecteur amovible (14).

3. Séparateur selon la revendication 1 ou 2, caractérisé en ce qu'un ou plusieurs raccords de conduite (3,4) du support (1) prévus pour un agent d'écoulement s'étendent transversalement par rapport au sens de démontage, la partie supérieure (12) et la zone du support (1) portant le raccord de conduite (3,4) possédant des surfaces d'ajustage (16) divergentes dans le sens de démontage.

4. Séparateur selon l'une des revendications 1 à 3, caractérisé en ce que le boîtier (11,21) contient un moteur électrique pourvu d'un accouplement mâle-femmelle et il est prévu, dans le support (1), un raccord (7,10) de la conduite d'alimentation électrique qui s'étend dans le sens de démontage.

5. Séparateur selon l'une des revendications 1 à 4, caractérisé en ce que le support (1) possède une plaque d'appui (2) pour le boîtier (21) d'une centrifugeuse à bol plein, les entrées et sorties du boîtier (21) étant reliées à l'aide d'accouplements élastiques (22,23) aux raccords de conduite (8,9) du support (1).

6. Séparateur selon l'une des revendications 1 à 5, caractérisé en ce qu'il est prévu, dans le raccord de conduite (8) du support (1) prévu pour l'amenée de mélange à séparer, un filtre (24) qui est apte à être extrait du support (1) à la façon d'un tiroir.

Fig. 1

Fig. 2

Fig. 3